(19) Europäisches Patentamt
European Patent Office
Office européen des brevets

(11) **EP 3 106 777 A1**

(12) **EUROPEAN PATENT APPLICATION**

(43) Date of publication:
**21.12.2016 Bulletin 2016/51**

(51) Int Cl.:
*F24J 2/46* *(2006.01)*     *F24J 2/54* *(2006.01)*

(21) Application number: **15382314.1**

(22) Date of filing: **15.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Abengoa Solar New Technologies, S.A.**
**41014 Sevilla (ES)**

(72) Inventor: **ALBARRAN LIGERO, Justo**
**41014 SEVILLA (ES)**

(74) Representative: **Igartua, Ismael**
**Galbaian S.Coop.**
**Polo de Innovación Garaia**
**Goiru Kalea 1 - P.O. Box 213**
**20500 Arrasate-Mondragón (ES)**

(54) **METHOD FOR ACTUATING UPON A HYDRAULIC SOLAR COLLECTOR TRACKING SYSTEM, AND HYDRAULIC SOLAR COLLECTOR TRACKING SYSTEM**

(57)     Method for actuating upon a hydraulic solar collector tracking system, said system (100) comprising at least one hydraulic cylinder (3, 5) to tilt a solar collector surface (2) of the hydraulic solar collector tracking system (100) with respect to at least one elevation axis (Y) to cause the solar collector tracking system (100) to go into a wind stow position. The pressure of at least one of the chambers of at least one hydraulic cylinder (3, 5) of the system (100) is measured, the actuation upon the hydraulic cylinder (3) in charge of causing the solar collector tracking system (100) to go into the wind stow position being regulated depending on said measured pressure, to cause the solar collector tracking system (100) to go into the wind stow position.

Fig. 1

**Description**

TECHNICAL FIELD

The present invention relates to a method for actuating upon a hydraulic solar collector tracking system and to a hydraulic solar collector tracking system that may be used to accurately point a solar collector at the sun throughout the day.

PRIOR ART

Current solar collector tracking systems, such as solar trackers and heliostats, usually employ two independent drives to tilt the collector about two axes. One axis is the elevation axis, whereby the collector is tilted within an angular range of about ninety degrees between "looking at the horizon" and "looking straight up". The other axis is vertical to the ground, commonly called "azimuth axis". A typical day starts with the azimuth drive pointing the collector east and ends with it pointing west. The required range of angular rotation depends on the earth's latitude at which the solar collector is installed. In the tropics the angular rotation needs more than 360 degrees.

Some prior art solar collector tracking systems use electric drives having high ratio gear reducers to turn the collector in the direction of the sun. In this sense, the angle of the system when it is tracking the sun is commonly known as tracking angle. Often, the tracking angle is calculated by counting the turns of the electric motor (from a 0 reference point signaled by another switch). Error in the gear reducers or linkage between the motor and collector, such as backlash and non-linearly, detracted from the accuracy. When high accuracy was required, the gear reducers were very expensive.

Other prior art solar collector tracking systems use hydraulic cylinders to turn the collector in the direction of the sun, at least a first hydraulic cylinder for tilting the solar collector with respect to the elevation axis, and a second hydraulic cylinder for tilting the solar collector with respect to the azimuth axis.

Due to high winds against them, solar collector tracking systems can be damaged. Thus, the solar collectors require to be able to go into the wind stow position to avoid damage when winds exceed those required by local codes. "Wind stow" is an attitude of the solar collectors in which it presents the smallest area to the wind, and in which the solar collector tracking system is subjected to the lowest wind load. Generally, a wind sensor such as an anemometer for example, will trigger a command for causing some solar collectors in the area of the wind sensor to go to the wind stow position, if it is detected that the wind speed reaches or exceeds a limit wind speed value.

To date, solar collectors are caused to go to the wind stow position according to one of the following criteria:

a) When the average value of a datum collected by a wind sensor placed at 10 meters high with respect to the ground during 10 minutes exceeds a certain limit wind speed value. The command for causing the solar collectors to go to the wind stow position is, then, triggered according to the European Code.
b) When the instantaneous value of a datum collected by a wind sensor placed at 10 meters high with respect to the ground exceeds a certain limit wind speed value. The command for causing the solar collectors to go to the wind stow position is, then, triggered according to the ASCE 7-05 code.

The average value according to the European code is commonly known as "10-minute average wind speed (V10m)", and differs from the instantaneous value of the ASCE 7-05 code, commonly known as V3s (each every 3 seconds), in a gust factor close to 1.5 applied to said average value. Therefore a relation between both values (average value and instantaneous value), at the level of ground, can be approximated according to the following equation:

$$V3s \approx 1.5*V10m \qquad\qquad [1]$$

Therefore, the entire system is built according to the wind speed that is required by local building codes, in order to secure that said system is not damaged when it is subjected to winds equal or lower than said wind speed. It is not worth to build it to support winds with greater speed, since due to the code requirements the system goes into the wind stow position when the wind speed achieves the one imposed by the code.

In the hydraulic solar collector systems, the triggered command reaches a control unit comprised in the hydraulic solar collector systems, and in response to said command the control unit actuates accordingly upon the corresponding hydraulic cylinder for causing the solar collector system to go into the wind stow position, by means of a hydraulic circuit.

US20100043776A1 discloses a hydraulic-based solar collector tracking system. When the wind speed rises above a certain value, the collector is programmed or operated to begin moving to the wind stow position, said movement being a response to a wind speed measurement. This fact requires a control unit arranged to receive the wind speed measurement, to analyze said received wind speed measurement, and to act upon the corresponding hydraulic cylinder(s) to cause the collector to go into the wind stow position if so required after the analysis.

US6123067A discloses a hydraulic-based solar collector tracking system, comprising at least one hydraulic azimuth actuator and one hydraulic elevation actuator. The system comprises pressure limiting means that allows it to be back-driven by wind in excess of those required to the local code, and it also has an automatic interconnection in the fluid lines between the azimuth and elevation actuators that will automatically put the elevation drive into the wind stow when the azimuth drive is being back-driven by wind. Therefore the necessity of using a control unit is avoided for causing the system to go into the wind stow position, the system being thus a fail-safe system that works independently of the controller. However, even considering the advantage of having a system that works even in the event of a power outage or failure in the controller, said solution requires to configure a system with a specific hydraulic circuit and construction which implies a more expensive solution, and also the impossibility to guide the movement of the collector to go into the wind stow position in a controlled manner, which can be advantageous in some circumstances as when the pressure in the azimuth actuator could be variable (above and below the certain pressure limiting value), due to winds with a non-constant speed close to the speed limit established by the local code. Besides, this solution also requires to modify the design (the pressure limiting means for example), according to the corresponding local code.

DISCLOSURE OF THE INVENTION

The object of the invention is to provide a method for actuating upon a hydraulic solar collector tracking system, and a hydraulic solar collector tracking system, as defined in the claims.

A first aspect of the invention refers to a method for actuating upon a hydraulic solar collector tracking system. The solar collector tracking system comprises a solar collector surface and at least one hydraulic cylinder to tilt the solar collector surface with respect to at least one elevation axis, to cause the solar collector tracking system to go into a wind stow position, "wind stow" being understood in the present invention as the attitude of the solar collector tracking system that presents the smallest area to the wind, and in which the solar collector tracking system is subjected to the lowest wind load.

In the method of the invention, the pressure of at least one of the chambers of at least one hydraulic cylinder of the system is measured. The actuation of the hydraulic cylinder in charge of tilting the solar collector surface with respect to the elevation axis, to cause the solar collector tracking system to go into the wind stow position, is regulated depending on said measured pressure. Hence, the movement of the solar collector surface to cause the solar collector tracking system to go into the wind stow position is regulated depending on said measured pressure. Therefore, the configuration of the system is the same irrespective of the local code, as it is sufficient to modify, by software for example, the pressure limiting value(s) at which the system is caused to go into the wind stow position.

It has been noted that the pressure level of at least one chamber of at least one hydraulic cylinder of the system is also indicative of the load subjected by said cylinder, and that said load is representative of the wind load subjected by the solar collector tracking system (as the total load includes the load due to the weight of the system itself which can be previously known, and the wind load). Therefore, it has been found out that simply taking into account said pressure it is possible to detect a risky situation for the solar collector tracking system, due to the wind load, and that it is possible to cause the movement of the solar collector surface to cause said solar collector tracking system to go into the wind stow position, without the need of complicated hydraulic circuits that require specific configurations of the system or without the need of external elements such as wind speed sensors (anemometers for example), as in the case of the prior art.

The method of the invention also allows increasing the performance of a solar plant including a plurality of solar collector tracking systems. As the pressure of at least one hydraulic cylinder of each solar collector tracking system is measured, each solar collector tracking system decides when it must go into the wind stow position, independently of the rest of the solar collector tracking systems included in said solar plant. This fact can imply that only some of the solar collector systems of a solar plant go into the wind stow position, while others continue pointing the sun, as all solar collector tracking systems can be faced to different wind loads depending on their geographical position for example. In contrast, when a wind sensor is used to take the decision of going into the wind stow position, a plurality of solar collector tracking systems are associated to said sensor and all of them go into the wind stow position simultaneously, irrespective of the wind loads to which each system is subjected to, none of said systems being producing electricity, or directing the sun rays to a receiver, while they are in said position.

In addition, the method can be implemented in a wider range of solar collector tracking systems, as a simple one comprising only one hydraulic cylinder for example (the cylinder in charge of moving the solar collector surface to cause the system to go into the wind stow position), since the pressure in at least one of the hydraulic cylinders of the system is indicative of the wind load to which it is subjected to, and each cylinder can also be considered independently.

Furthermore, the performance of the installation comprising one or more solar collector tracking systems where the method is implemented is increased, since the pressure of the at least one chamber of the cylinder takes also into account the direction of the wind, and not only the wind speed, as the wind load to which the solar collector is subjected to depends also on said direction (the wind load to which the solar collector is subjected to is different before a front wind or a rear wind for example, even with the same wind speed in both cases). In contrast, the solar collector systems of the prior art are designed to go into the wind stow position when a limit wind speed is detected, irrespective of the direction of the wind, and they are designed according to said limitation. Therefore, with the proposed method the performance of the solar collector tracking system is improved, as the solar collector system could continue tracking the sun even in the event of high winds (where the wind speed is equal or even greater that the wind speed limit imposed by the local code). Consequently, the entire system can be built to stand winds with greater speed that one required by the local code, since as it goes into the wind stow position not only taken into account the wind speed, but also taking into account its direction, it can occur the system not to go into the wind stow position in spite of the wind speed reaches the limit established by said code.

A second aspect of the invention refers to a hydraulic solar collector tracking system comprising at least one hydraulic cylinder to cause the solar collector tracking system to track the sun, and to cause said solar collector tracking system to go into a wind stow position tilting its solar collector surface with respect to an elevation axis. The hydraulic cylinder comprises at least two opposite chambers containing a fluid, the system further comprising at least one pressure sensor adapted for measuring the pressure of the fluid in at least one of the chambers of the hydraulic cylinder. The control unit is communicated with said sensor and is also arranged to regulate the actuation upon the hydraulic cylinder in charge of tilting the solar collector surface to cause the solar collector tracking system to go into the wind stow position depending on said measured pressure, the movement of the solar collector surface to cause the solar collector tracking system to go into the wind stow position being regulated depending on said measured pressure. The advantages obtained with the system of the second aspect of the invention are, at least, those already explained with respect to the first aspect of the invention.

These and other advantages and features of the invention will become evident in view of the drawings and the detailed description of the invention.

DESCRIPTION OF THE DRAWINGS

Figure 1 shows a preferred embodiment of a hydraulic solar collector tracking system, in a position tracking the sun.

Figure 2 shows the system of Fig. 1, in the wind stow position.

Figure 3 shows an evolution of the pressure limits associated to a chamber of a hydraulic elevation cylinder of Figures 1 and 2, for a specific wind speed limit imposed by a specific local code, for different elevation tilt angles.

Figure 4 shows an evolution of the pressure limits associated to a chamber of a hydraulic azimuth cylinder of Figures 1 and 2, for a specific wind speed limit imposed by a specific local code, for different elevation tilt angles.

DETAILED DISCLOSURE OF THE INVENTION

A first aspect of the invention is referred to a method for actuating upon a hydraulic solar collector tracking system 100, in particular to cause said system 100 to go into a wind stow position. "Wind stow" in the present invention, is an attitude of the solar collector tracking system 100 that presents the smallest area of a solar collector surface 2 to the wind, and in which the solar collector tracking system 100 is subjected to the lowest wind load.

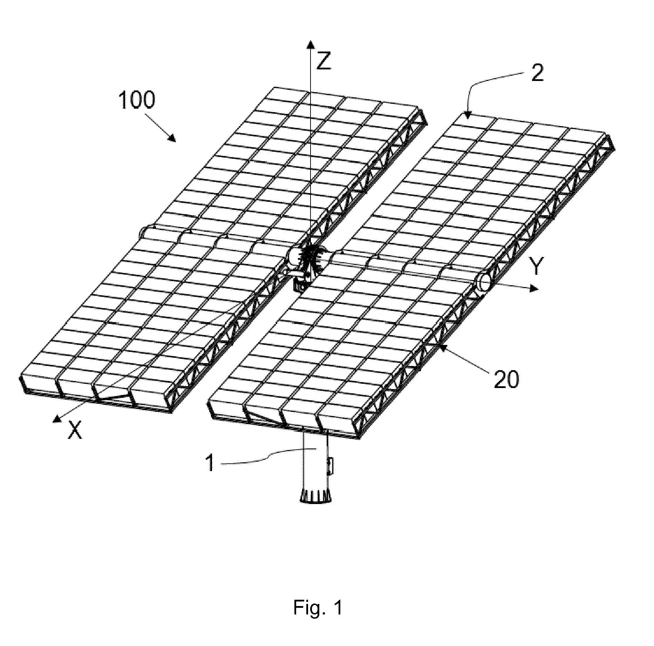

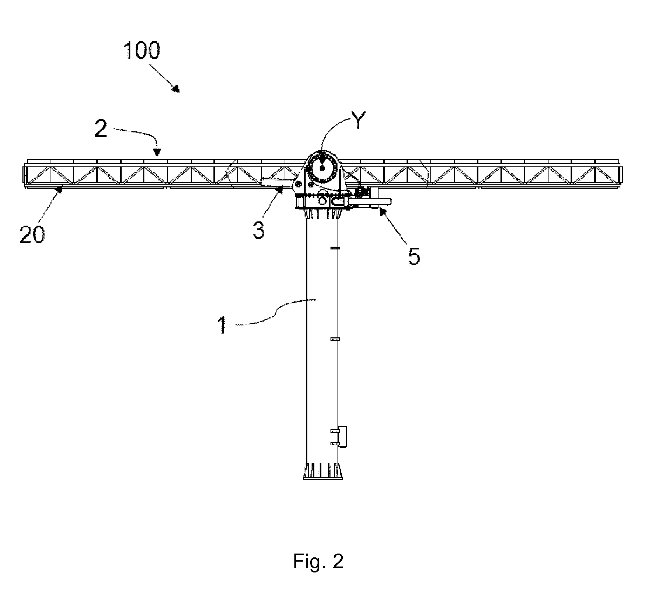

A second aspect of the invention is referred to a hydraulic solar collector tracking system 100. In Figures 1 and 2 a preferred embodiment of the solar collector tracking system 100 is shown. Figure 1 shows the system 100 tracking the rays of the sun, and Figure 2 shows the system 100 in the wind stow position. The system 100 has a vertically oriented mast 1 having a vertically oriented axis Z. The bottom end of the mast 1 would be fixed to the ground (not shown). The solar collector tracking system 100 comprises a solar collector surface 2 mounted on a platform 20, and can be, for example, a photovoltaic solar tracker as the preferred embodiment shown in the Figures, or a heliostat. In case of being a photovoltaic solar tracker, the solar collector surface 2 is adapted for collecting sun rays that are used to produce electricity in a known manner, and in case of being a heliostat, the solar collector surface 2 is adapted for directing the sun rays to a receiver where they are used to produce electricity in a known manner.

A system 100 comprises at least one hydraulic cylinder to track the sun, but preferably, a system 100 comprises at least one hydraulic elevation cylinder 3 to tilt the solar collector surface 2 with respect to an horizontal elevation axis Y (in particular the platform 20 including the surface 2), controlled by a control unit (not shown) comprised in the system 100, and can also comprise at least one hydraulic azimuth cylinder 5 to rotate the solar collector surface 2 with respect to a vertical azimuth axis Z, controlled by the control unit. As shown in Figure 2, in the preferred embodiment the system 100 comprises a hydraulic elevation cylinder 3 and a hydraulic azimuth cylinder 5, and operates as an X-Y-Z three-axis system. The hydraulic elevation cylinder 3 further causes the system 100 to go into the wind stow position if so required, turning the solar collector surface 2 with respect to the elevation axis Y. Each hydraulic cylinder of the system 100 comprises a rod that is retracted or expanded to cause the movement of the solar collector surface 2 in one or another direction with respect to the corresponding axis X and Z, and two opposed and independent chambers separated by the rod, each chamber comprising a fluid inside (preferably the fluid is mineral oil).

Each hydraulic cylinder 3 and 5 is part of a hydraulic circuit (not shown). The hydraulic circuit is in charge of unloading (or loading) the fluid from the chambers of the corresponding cylinder 3 and 5, the rod of said cylinders 3 and 5 being moved in one or another direction according to the unloading (or loading) process. The hydraulic circuit comprises at least one valve which is controlled to control the unloading (or loading) process. Different configurations of hydraulic circuits are well known for such kind of cylinders 3 and 5, where the unloading (or loading) process is controlled by a control over the at least one valve, and any of them can be used in the invention. Both cylinders 3 and 5 could also share a same hydraulic circuit.

In the method of the invention, the pressure of at least one of the chambers of at least one of the hydraulic cylinders of the system 100 where the method is implemented is measured, and the actuation upon the hydraulic elevation cylinder 3 to cause the system 100 to go into the wind stow position is regulated depending on said measured pressure. Therefore, the method allows the system 100 to go into the wind stow position in a simple and economic manner, as no additional elements are required such as external sensors or complicated hydraulic circuits for example.

In addition, the pressure sensor(s) needed in the system 100 to implement the method is normally included in such type of systems, for maintenance purposes for example, in order to supervise the status of the corresponding hydraulic cylinder. Thus, the implementation of the method does not require additional costs due to the inclusion of additional elements in the system 100. Besides, as the pressure of the hydraulic cylinder itself is measured, the system 100 is caused to go into the wind stow position more precisely, the performance of the system 100 being increased (if the wind stow position is caused by an external sensor such as an anemometer for example, the wind conditions in the place where the anemometer is placed could not be exactly equal to the condition at the system 100). Furthermore, with respect to the performance and as it has been explained before, as the movement of the solar collector surface 2 to cause the system 100 to go into the stow position depends also on the wind direction with the method of the invention, said method allows the system 100 to take advantage of the sun at wind speeds where the systems of the prior art are already in wind stow positions (wind speeds greater than ones imposed by the local code).

The method of the invention also allows increasing the performance of a solar plant including a plurality of solar collector tracking systems 100, provided that said systems 100 implement said method. As the pressure of at least one hydraulic cylinder of each system 100 is measured, each system 100 decides when it must go into the wind stow position, independently of the rest of the solar collector tracking systems 100 included in said solar plant. This fact can imply that only some of the solar collector systems 100 of a solar plant go into the wind stow position, while other systems 100 continue pointing the sun, as the systems 100 can be faced to different wind loads depending on their geographical position for example.

For implementing the method, previously at least one pressure limit for each hydraulic cylinder (for the corresponding chamber), whose pressure is considered to cause the system 100 to go into the wind stow position, is established according to the local code. A pressure limit can be obtained, for example, as follows:

- The system 100 is previously exposed to the worst possible wind conditions to be withstand by it according to the local code (in a real situation or in a simulated situation for example), that could be for example before front winds at a maximum wind speed imposed by the local code. Said exposure can be calculated accurately in a boundary layer wind tunnel test for example. The tracker performance inside a wind flow depends on its geometry. At said situation, the pressure of the chambers of the hydraulic cylinders is measured, and the measured value is selected as the pressure limit at which the system 100 is later caused to go into the wind stow position, for each case. Changing the direction of the wind during the exposure of the system 100 (the wind speed being maintained constant), it was found out that the measured pressure decreased, and therefore, that, with said different directions of the wind, the system 100 could be subjected to greater wind speeds.

Hence, the method allows fulfilling the requirements imposed by the local code, in a simple and economic manner, as well as obtaining at least the advantages previously commented.

The measured pressure is compared with stored information (information obtained in a boundary layer wind tunnel for example, as explained before), which links different pressures of each chamber of the corresponding hydraulic cylinder whose pressure is considered to cause the system 100 to go into the wind stow position, with different wind loads subjected or to be subjected by the solar collector tracking system 100. Said stored information comprises at least one pressure limit linked to the maximum wind load able to be subjected by the solar collector tracking system 100 for each case. The movement of the solar collector surface 2 to cause the solar collector tracking system 100 to go into the wind stow position is then caused if, as a result of the comparison, it is determined that a measured pressure reaches or exceeds its corresponding pressure limit. When it is determined that a measured pressure reaches or exceeds the corresponding pressure limit, a trigger command is generated to control the actuation of the hydraulic elevation cylinder 3, so that the hydraulic elevation cylinder 3 causes the system 100 to go into the wind stow position by tilting the solar collector surface 2 with respect to the elevation axis Y.

In some embodiments of the method of the invention, the pressure of at least one of the chambers of each hydraulic cylinder of the system 100 used to cause the system 100 (the surface 2) to track the sun is measured. In said embodiments, each of said chambers has a pre-established pressure limit (the establishment of said value can be done as explained before), and when it is determined that one measured pressure reaches its corresponding pressure limit, the system 100 goes into the wind stow position. Depending on the direction of the wind, for example, different hydraulic cylinders can be subjected to different loads, so that depending on said direction the hydraulic cylinder whose pressure reaches its pressure limit may vary. Therefore, the fact of taking into account the pressure of any of the hydraulic cylinders present in the system 100 secures the system 100 in any adverse wind situation, at the same time as the performance is also increased when comparing to the prior art solutions.

In the method, instead of considering the pressure of only one of the chambers of a hydraulic cylinder to determine if the system 100 must go into the wind stow position, in other embodiments the pressure of all the chambers of the corresponding hydraulic cylinders can also be considered. In said embodiments, each chamber comprises a pre-established pressure limit, and the establishment can be done as explained before.

A preferred embodiment of the method is adapted for being implemented in the preferred embodiment of the system 100, which comprises a hydraulic elevation cylinder 3 and a hydraulic azimuth cylinder 5. In the preferred embodiment of the method, the pressure of each chamber of both cylinders 3 and 5 is measured, the actuation upon the hydraulic elevation cylinder 3 to cause the system 100 to go into the wind stow position being regulated depending on said measured pressures.

In some embodiments, a tilt angle of the solar collector surface 2 with respect to the elevation axis Y (elevation tilt angle with respect to an horizontal plane) and/or the azimuth axis Z (azimuth tilt angle with respect to a specific selected reference as origin) is also taken into account to regulate the movement of the surface 2 to cause the solar collector system 100 to go into the wind stow position, in addition to the measured pressure(s). In said embodiments, the system 100 is previously exposed to different wind loads (as stated before), at different tilt angles (with respect to the elevation axis Y and/or the azimuth axis Z), and the pressure of the corresponding chamber(s) is measured to determine a pressure limit for each case. Therefore, in said embodiments at least one kind of tilt angle (elevation tilt angle or azimuth tilt angle) of the surface 2 is determined, and the measured pressure(s) is compared with the corresponding pressure limit(s). When it is determined that a measured pressure reaches or exceeds the corresponding pressure limit, a trigger command is generated upon the hydraulic elevation cylinder 3, so that said hydraulic elevation cylinder 3 causes the system 100 to go into the wind stow position tilting the surface 2 with respect to the elevation axis Y.

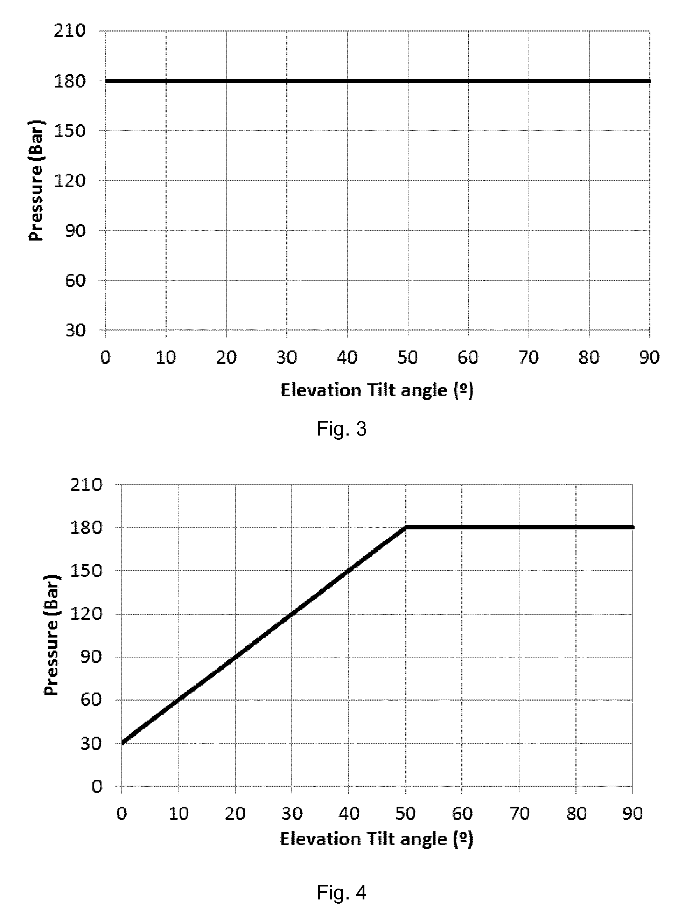

Figures 3 and 4 show, by way of example, pressure limits associated to a chamber of the hydraulic elevation cylinder 3 and to a chamber of the hydraulic azimuth cylinder 5 respectively, for a specific wind speed limit imposed by a certain local code (12 m/s in this case) and for the hydraulic solar tracking system 100 of Figures 1 and 2, for different elevation tilt angles with respect to the elevation axis Y. The selected cylinder in each case depends on the total load it has to withstand (the wind load to which it is going to be subjected to, and also to the load due to the weight of the part of the system 100 it has to move): the higher the load is the higher the pressure rating of the cylinder is. For example, for a given wind speed and a given wind direction, the wind load on the system 100 is higher for bigger areas of the solar collector surface 2; and for a heavier part of the system 100 to be moved, a higher force must be done by the corresponding cylinder 3, 5 to maintain the surface 2 in position or to tilt it. Accordingly, the pressure limits of each cylinder 3 y 5 also depend at least on said total load.

In the preferred embodiment of the method, the elevation tilt angle is also considered to regulate the movement of the hydraulic solar collector tracking system 100 for going into the wind stow position, in addition to the measured pressures. Therefore, in the preferred embodiment the pressure limits included in the stored information consider also said elevation tilt angle. Going back to Figures 3 and 4, the new pressure limit for each chamber considered to cause the system 100 to go into the wind stow position, and included in the stored information, is as follows:

For a chamber of the hydraulic elevation cylinder 3:

$$P = P\text{max} \qquad\qquad [2]$$

For a chamber of the hydraulic azimuth cylinder 5:

$$P = Pmax; \text{ for } EL \geq 50°; \qquad [3]$$

$$P = (Pmax/60)*EL + (Pmax/6); \text{ for } EL < 50°. \qquad [4]$$

Wherein:

- P: new pressure limit, considering the tilt angle.
- Pmax: pressure limit according to Figures 3 and 4.
- EL: elevation tilt angle.

The limit of 50° of equation [3] has been established during the exposure of the preferred embodiment of the system 100 to wind conditions to establish the pressure limits, but said value can be different for other embodiments.

As stated before, a second aspect of the invention is referred to a hydraulic solar collector tracking system 100 for tracking the rays of the sun, as shown by way of example in Figures 1 and 2.

The system 100 comprises at least one hydraulic cylinder 3, 5 to cause the solar collector surface 2 of the system 100 to track the sun (and thus to cause the system 100 to track the sun), and a control unit arranged for actuating upon the hydraulic cylinder 3, 5, so that the solar collector surface 2 tracks the sun. Each hydraulic cylinder 3, 5 is a hydraulic cylinder comprising at least two opposite chambers containing a fluid, preferably mineral oil, the system 100 further comprising at least one pressure sensor (not shown) adapted for measuring the pressure of the fluid in at least one of the chambers of at least one cylinder 3, 5. The pressure sensor is communicated with the control unit, said control unit receiving the measured pressure. The pressure can be continuously measured, or it can be periodically measured (with a periodicity selected by the manufacturer according to his requirements or to external requirements).

If the system 100 comprises a single hydraulic cylinder, said hydraulic cylinder is a hydraulic elevation cylinder 3 that is also adapted for tilting the solar collector surface 2 to cause the system 100 to go into the wind stow position controlled by the control unit, when required. In this case, the pressure of at least one chamber of said hydraulic elevation cylinder 3 is measured with a corresponding sensor, and the control unit is also arranged to regulate the actuation upon the hydraulic elevation cylinder 3 for tilting the solar collector surface 2 to cause the system 100 to go into the wind stow position depending on said measured pressure.

If the system 100 comprises a plurality of hydraulic cylinders, at least one of them is an hydraulic elevation cylinder 3 that is also adapted for causing the system 100 to go into the wind stow position controlled by the control unit. In this case, the pressure of at least one chamber of at least one of the hydraulic cylinders is measured for regulating the movement of the solar collector surface 2 to cause the system 100 to go into the wind stow position, but preferably the pressure of at least one chamber of each hydraulic cylinder is measured for regulating said movement of the solar collector surface 2. The control unit is also arranged to regulate the actuation upon the hydraulic elevation cylinder 3 for tilting the solar collector surface 2 to cause the system 100 to go into the wind stow position depending on said measured pressure(s). In a preferred embodiment, the system 100 comprises a hydraulic elevation cylinder 3 for causing the system 100 to go into the wind stow position, controlled by the control unit, and an azimuth cylinder 5 to rotate the solar collector surface 2 with respect to a vertical azimuth axis Z, controlled by the control unit, and a pressure sensor (not shown) for each chamber of each hydraulic cylinder 3 and 5.

The system 100, in any of its embodiments, also comprises at least one storage device (not shown), internal or external to the control unit, with information linking different pressures of each chamber, whose pressure is measured, to different wind loads subjected or to be subjected by the solar collector tracking system 100. Said information comprises at least one corresponding pressure limit for each chamber, linked to the maximum wind load able to be subjected by the solar collector tracking system 100. The pressure limit(s) can be obtained as explained above. The control unit is arranged to compare the measured pressure with the corresponding pressure limit, to determine if the measured pressure reaches or exceeds said pressure limit, and to regulate the movement of the solar collector surface 2, via the hydraulic elevation cylinder 3, to cause the system 100 to go into the wind stow position, if said control unit determines that said measured pressure reaches or exceeds said pressure limit. In particular, the control unit is arranged to generate a trigger command for the hydraulic elevation cylinder 3, to cause said hydraulic elevation cylinder 3 to tilt the solar collector surface 2 to cause the system 100 to go into the wind stow position, when said control unit determines that the measured pressure reaches or exceeds the corresponding pressure limit.

Each chamber whose pressure is to be measured (or is measured) has a pre-established pressure limit (the establishment of said value can be done as explained above), and when the control unit determines that one measured pressure reaches its pressure limit, the control unit causes the elevation cylinder 3 to tilt the solar collector surface 2 to cause the system 100 to go into the wind stow position. Depending on the direction of the wind, for example, different cylinders present in the system 100 can be subjected to different loads, therefore, the fact of taking into account the pressure of any of said cylinders secures the safety of the system 100 in any situation, at the same time as the performance is also increased when comparing to the prior art solutions.

The system 100 can also comprise at least one angle sensor (not shown) for detecting the tilt angle of the solar collector surface 2 with respect the elevation axis Y (elevation tilt angle) and/or the azimuth axis Z (azimuth tilt angle), and the control unit is communicated with said angle sensor, receiving the measured tilt angle(s). The control unit computes the desired tilt angle(s) that the solar collector surface 2 should face in order to point at the sun, and causes the actuation of the hydraulic cylinder(s) to get said desired tilt angle(s) according to the measured tilt angle(s). If the system 100 comprises elevation cylinders 3 (one or more elevation cylinders 3, but no azimuth cylinders), the system 100 comprises a single angle sensor to detect the elevation tilt angle of the solar collector surface 2 with respect to the elevation axis Y. If the system 100 comprises also at least one azimuth cylinder 5, the system 100 comprises an angle sensor to detect the elevation tilt angle of the solar collector surface 2 with respect to the elevation axis Y and an angle sensor to detect the azimuth tilt angle of the solar collector surface 2 with respect to the azimuth axis Z. The control unit periodically commands all the hydraulic cylinders to readjust the angle of the solar collector surface 2 to follow the sun. The interval between these periodic adjustments will be very short if great accuracy is required and longer if the tolerance is greater between the desired and reported angles. Depending on the requirements of the solar collector system 100, the overall accuracy can be within a very small fraction of a degree.

In the preferred embodiment, the system 100 comprises an angle sensor for detecting the elevation tilt angle of the solar collector surface 2, and the control unit is communicated with said angle sensor, receiving the measured elevation tilt angle. The control unit of the preferred embodiment of the system 100 is adapted for implementing the equations [2] to [4] explained for the first aspect of the invention, in order to obtain the pressure limits from which it causes the system 100 to go into the wind stow position.

In some embodiments, the control unit is arranged to evaluate only one pressure measurement. The control unit, then, determines whether the pressure level of at least one chamber of one hydraulic cylinder reaches or exceeds the corresponding pressure limit, to cause the system 100 to go into the wind stow position. This is preferably only applied to the case in which the system comprises only one hydraulic cylinder (the hydraulic elevation cylinder 3) to track the sun.

In other embodiments, the control unit is arranged to evaluate the pressure of all the hydraulic cylinders of the system 100, which are in charge of causing the system 100 to track the sun. The control unit determines whether any of the measured pressures reaches or exceeds the corresponding pressure limit, to cause the system 100 to go into the wind stow position. This is preferably applied to all the cases in which the system 100 comprises a plurality of hydraulic cylinders.

In other embodiments the control unit is also arranged to consider the tilt angle of the solar collector surface 2 with respect to the elevation axis Y and/or with respect to the azimuth axis Z, to cause or not the system 100 to go into the wind stow position, even when it considers only the pressure of one hydraulic cylinder or when it considers the pressure of all the hydraulic cylinders of the system 100. The tilt angle(s) is determined according to the corresponding angle sensor. In said embodiments, the information stored in the storage device comprises a pressure limit linked to the maximum wind load at different tilt angles.

The control unit can be a processor, microprocessor, a controller, a FPGA or any other device with data-processing capability. The storage device can be a RAM memory or any other kind of memory, for example.

**Claims**

1.  Method for actuating upon a hydraulic solar collector tracking system, said system (100) comprising at least one hydraulic cylinder (3, 5) to tilt a solar collector surface (2) of the hydraulic solar collector tracking system (100) with respect to at least one elevation axis (Y) to cause the solar collector tracking system (100) to go into a wind stow position, **characterized in that** a pressure of at least one of the chambers of at least one hydraulic cylinder (3, 5) of the system (100) is measured, the actuation of the hydraulic cylinder (3) in charge of tilting the solar collector surface (2) with respect to the elevation axis (Y) being regulated depending on said measured pressure, to cause the solar collector tracking system (100) to go into the wind stow position.

2.  Method according to claim 1, wherein for regulating the movement of the solar collector surface (2) to cause the solar collector tracking system (100) to go into the wind stow position, the measured pressure is compared with stored information which links different pressures of the corresponding chamber with different wind loads subjected or to be subjected by the solar collector tracking system (100), said stored information comprising at least one pressure limit linked to the maximum wind load able to be subjected by the solar collector tracking system (100), said movement being caused if as a result of the comparison it is determined that the measured pressure reaches or exceeds the corresponding pressure limit.

3. Method according to claim 2, wherein, when it is determined that the measured pressure reaches or exceeds the corresponding pressure limit, a trigger command is generated to cause the corresponding hydraulic cylinder (3) to tilt the solar collector surface (2) to cause the solar collector tracking system (100) to go into the wind stow position.

4. Method according to any of claims 1 to 3, wherein an elevation tilt angle of the solar collector surface (2) with respect to the elevation axis (Y) is also determined, said elevation tilt angle being also taken into account to regulate the movement of the solar collector surface (2) to cause the solar collector to go into the wind stow position in addition to the measured pressure.

5. Method according to claim 4, wherein for regulating the movement of the solar collector surface (2) to cause the solar collector tracking system (100) to go into the wind stow position, the measured pressure is compared with stored information which links different pressures of the corresponding chamber to different wind loads subjected or to be subjected by the solar collector tracking system (100) and to different elevation tilt angles of the solar collector tracking system (100), said stored information comprising at least one pressure limit linked to the maximum wind load able to be subjected by the solar collector tracking system (100) at different elevation tilt angles, said movement being caused if it is determined that the measured pressure reaches or exceeds the pressure limit linked to the determined elevation tilt level.

6. Method according to claims 4 or 5, wherein an azimuth tilt angle of the solar collector surface (2) with respect to an azimuth axis (Z) is also determined, said azimuth axis (Z) being a vertical axis, and said azimuth tilt angle being also taken into account to regulate the movement of the solar collector surface (2) to cause the solar collector to go into the wind stow position in addition to the measured pressure.

7. Method according to claim 6, wherein for regulating the movement of the solar collector surface (2) to cause the solar collector tracking system (100) to go into the wind stow position, the measured pressure is compared with stored information which links different pressures of the corresponding chamber to different wind loads subjected or to be subjected by the solar collector tracking system (100) and to different elevation tilt angles and azimuth tilt angles of the solar collector tracking system (100), said stored information comprising at least one pressure limit linked to the maximum wind load able to be subjected by the solar collector tracking system (100) at different elevation tilt angles and azimuth tilt angles, said movement being caused if it is determined that the measured pressure reaches or exceeds the pressure limit linked to the determined tilt level.

8. Hydraulic solar collector tracking system comprising at least one hydraulic cylinder (3, 5) in charge of causing said solar collector tracking system (100) to go into a wind stow position, by tilting a solar collector surface (2) of the system (100) with respect to an elevation axis (Y), and a control unit arranged for actuating upon the hydraulic cylinder (3, 5), **characterized in that** the hydraulic cylinder (3, 5) comprises at least two opposite chambers housing a fluid, the system (100) further comprising at least one pressure sensor adapted for measuring the pressure of the fluid in at least one of the chambers of at least one of the hydraulic cylinders (3, 5) of the system (100), the control unit being communicated with said sensor and being also arranged to regulate the actuation upon the hydraulic cylinder (3) in charge of tilting the solar collector surface (2) to cause the solar collector tracking system (100) to go into the wind stow position depending on said measured pressure, by tilting it with respect to an elevation axis (Y).

9. Hydraulic solar collector tracking system according to claim 8, comprising a plurality of hydraulic cylinders including at least one hydraulic elevation cylinder (3) in charge of tilting the solar collector surface (2) with respect to the elevation axis (Y) and at least one hydraulic azimuth cylinder (5) in charge of tilting the solar collector surface (2) with respect to a vertical azimuth axis (Z), each hydraulic cylinder (3, 5) being a hydraulic cylinder comprising at least two opposite chambers with fluid inside, the system (100) further comprising at least one pressure sensor adapted for measuring the pressure of the fluid in at least one of the chambers of each hydraulic cylinder (3, 5), and the control unit being communicated with said sensors and being configured to regulate the actuation of the hydraulic elevation cylinder (3) in charge of tilting the solar collector surface (2) with respect to the elevation axis (Y), to cause said system (100) to go into the wind stow position depending on said measured pressures.

10. Hydraulic solar collector tracking system according to claims 8 or 9, comprising a storage device with information linking different pressures of at least the chamber of each hydraulic cylinder (3, 5) whose pressure is considered to cause the solar collector tracking system (100) to go into the wind stow position to different wind loads subjected or to be subjected by the solar collector tracking system (100) stored therein, said information comprising at least one pressure limit linked to the maximum wind load able to be subjected by the solar collector tracking system (100), the control unit being also configured to compare the measured pressure with the corresponding pressure limit, to determine if any measured pressure reaches or exceeds its corresponding pressure limit, and to cause the movement of the solar collector surface (2) to cause the solar collector tracking system (100) to go into the wind stow position if said control unit determines that any measured pressure reaches or exceeds its corresponding pressure limit.

11. Hydraulic solar collector tracking system according to claims 9 or 10, wherein the control unit is also configured to generate a trigger command to cause the hydraulic cylinder (3, 5) to tilt the solar collector surface (2) to cause the solar collector tracking system (100) to go into the wind stow position, when said control unit determines that a measured pressure reaches or exceeds its corresponding pressure limit.

12. Hydraulic solar collector tracking system according to any of claims 8 to 11, comprising at least one angle sensor adapted for detecting an elevation tilt angle of the solar collector surface (2) with respect to the elevation axis (Y) and which is communicated with the control unit, the control unit being further configured to determine the elevation tilt angle of the solar collector surface (2) according to said detection, and to regulate the actuation of the hydraulic cylinder (3) in charge of tilting the solar collector surface (2) according to said elevation tilt angle and to the measured pressure, to cause the solar collector tracking system (100) to go into the wind stow position.

13. Hydraulic solar collector tracking system according to any of claims 9 to 12, comprising at least one angle sensor adapted for detecting an azimuth tilt angle of the solar collector surface (2) with respect to the azimuth axis (Z) and which is communicated with the control unit, the control unit being further arranged to determine the azimuth tilt angle of the solar collector surface (2) according to said detection, and to regulate the actuation of the hydraulic cylinder (3) in charge of tilting the solar collector surface (2) to cause the solar collector tracking system (100) to go into the wind stow position according to said azimuth tilt angle and to the measured pressure.

14. Hydraulic solar collector tracking system according to claims 12 or 13, comprising a storage device with information linking different pressures of the chambers of the hydraulic cylinder (3, 5) to different wind loads subjected or to be subjected by the solar collector tracking system (100) and to different values of the kind of tilt angles considered to cause the system (100) to go into the wind stow position, said information comprising at least one pressure limit linked to the maximum wind load able to be subjected by the solar collector tracking system (100) for each different value of the considered kind of tilt angles, the control unit being also configured to compare the measured pressure with the pressure limit linked to the determined tilt angle, to determine if the measured pressure reaches or exceeds said pressure limit, and to regulate the movement of the solar collector surface (2) to cause the solar collector tracking system (100) to go into the wind stow position if the measured pressure reaches or exceeds said pressure limit.

Fig. 1

Fig. 2

Fig. 3

Fig. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 098 806 A1 (HISPANOTRACKER S L [ES]) 9 September 2009 (2009-09-09) * paragraph [0061] - paragraph [0063]; figures 2,10 * | 1-3,8-11 | INV. F24J2/46 F24J2/54 |
| A | US 2013/000632 A1 (LUNDAHL ROBERT D [US] ET AL) 3 January 2013 (2013-01-03) * paragraph [0064]; figures 1,10 * | 1-14 | |
| A,D | US 6 123 067 A (WARRICK JAMES C [US]) 26 September 2000 (2000-09-26) * column 6, line 8 - line 18; figure 10 * | 1-14 | |
| A | EP 2 072 933 A2 (HAWE HYDRAULIK SE [DE]) 24 June 2009 (2009-06-24) * paragraph [0073]; figure 4 * | 1-14 | |
| A | US 2012/285511 A1 (LEHLE ROBERT [DE]) 15 November 2012 (2012-11-15) * paragraph [0046]; figure 5 * | 1-14 | TECHNICAL FIELDS SEARCHED (IPC) |
| A | US 4 256 088 A (VINDUM JORGEN O) 17 March 1981 (1981-03-17) * column 8, line 31 - line 43; figure 13 * | 1-14 | F24J |
| A | WO 96/29745 A1 (HELFGOTT & KARAS P C [US]; SOLEL SOLAR SYSTEM LTD [IL]; DAGAN ELDAD [I) 26 September 1996 (1996-09-26) * page 11, line 8 - line 15; figures 6a-6c * | 1-14 | |

The present search report has been drawn up for all claims

| Place of search | Date of completion of the search | Examiner |
|---|---|---|
| The Hague | 25 November 2015 | Mendão, João |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                               
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 38 2314

25-11-2015

| Patent document cited in search report | | Publication date | Patent family member(s) | | Publication date |
|---|---|---|---|---|---|
| EP 2098806 | A1 | 09-09-2009 | AU | 2007343224 A1 | 17-07-2008 |
| | | | CA | 2673989 A1 | 17-07-2008 |
| | | | CN | 101680686 A | 24-03-2010 |
| | | | EP | 2098806 A1 | 09-09-2009 |
| | | | MA | 31114 B1 | 04-01-2010 |
| | | | US | 2010095955 A1 | 22-04-2010 |
| | | | WO | 2008084121 A1 | 17-07-2008 |
| US 2013000632 | A1 | 03-01-2013 | US | 2013000632 A1 | 03-01-2013 |
| | | | WO | 2013003737 A2 | 03-01-2013 |
| US 6123067 | A | 26-09-2000 | NONE | | |
| EP 2072933 | A2 | 24-06-2009 | NONE | | |
| US 2012285511 | A1 | 15-11-2012 | DE | 202009017658 U1 | 15-04-2010 |
| | | | EP | 2519785 A2 | 07-11-2012 |
| | | | US | 2012285511 A1 | 15-11-2012 |
| | | | WO | 2011080270 A2 | 07-07-2011 |
| US 4256088 | A | 17-03-1981 | NONE | | |
| WO 9629745 | A1 | 26-09-1996 | AU | 5524396 A | 08-10-1996 |
| | | | IL | 113098 A | 10-03-1998 |
| | | | WO | 9629745 A1 | 26-09-1996 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100043776 A1
- US 6123067 A